# EUROPEAN PATENT APPLICATION

(11) **EP 2 093 689 A2**
(43) Date of publication of application: **26.08.2009**
(21) Application number: 09153240.8
(22) Date of filing: 19.02.2009
(51) Int. Cl.: G06F 21/00

(54) **System and method for withdrawing rights object of the digital contents**

(30) Priority: 19.02.2008 KR 20080014966
(71) Applicant: Samsung Electronics Co., Ltd., Suwon-si Gyeonggi-do (KR)
(72) Inventor: Han, Kyu Hui, Gyeonggi-do (KR); Lee, Kyung Keun, Gyeonggi-do (KR); Lee, Byung Rae, Gyeonggi-do (KR)
(74) Representative: Harrison Goddard Foote

(57) **Abstract**

A system in which a source device can withdraw a Rights Object (RO) that a source device requested a target device to move through a Rights Issuer (RI) and operation method thereof are provided. The method includes transmitting a rights object withdrawal request message to a rights issuing server by a device, transmitting a rights object withdrawal response message to the device by the rights issuing server in response to the rights object withdrawal request message, and withdrawing and installing a corresponding rights object when receiving the rights object withdrawal response message by the device.

## Description

### BACKGROUND OF THE INVENTION

### 1. Field of the Invention:

The present invention relates to a method and system for providing a digital contents service. More particularly, the present invention relates to a system in which a source device withdraws a Rights Object (RO) that the source device requested to move to a target device through a Rights Issuer (RI) and an operation method thereof.

### 2. Description of the Related Art:

Recently, with increased popularity of the Internet and developments of multimedia technology, distributing and acquiring digital contents have become easier. However, if there is no way to protect the copyright of digital contents, the developments of the multimedia technology may assist in the illegal distribution of the digital contents.

Thus, Digital Rights Management (DRM) has been suggested to prevent illegal copying or redistribution of the digital contents. The DRM is a system technology for safely protecting and managing a right for the digital contents, for preventing illegal copying of contents, for acquiring contents usage right and producing and distributing of contents. The DRM is also a protection and management system for a usage procedure.

The DRM allows access to encrypted digital contents. However, if the encrypted digital contents are played through decoding, a specific license, such as a Rights Object (RO), is required. Therefore, if the DRM is applied, the digital contents can be effectively protected.

The function of the DRM can be divided into the protection of digital contents, the administration of usage rule and the administration of billing system. The digital contents can be protected by the DRM technology through the encryption procedure so that illegal distribution or illegal usage of the digital contents may be prevented through all procedures including production, distribution, use and discard. Moreover, the DRM allows only a legal user having an encryption key, such as the RO, to decode and use the encrypted digital contents. The DRM does not allow the digital contents to be used without the encryption key, for example if the digital contents are illegally distributed. Therefore, the digital contents can be protected.

The RO (encryption key) is generated in a rights generating server, such as a Rights Issuer (RI), and sold to a user. The RO is separated from the digital contents and stored in a device, and can allow or limit the digital contents execution, based on an RO that corresponds to the digital contents in the request of the digital contents execution.

The RO includes a constraint. The constraint is information that limits the use of the digital contents and can be stored in a specific field within the RO. For example, if it is permitted to play the digital contents a total of ten times when a specific MP3 file is purchased, the constraint of playing ten times is set in the RO in a count mode. In this case, the count is decreased by one whenever the MP3 file is played. If the count becomes '0' according to tenth time play, the play of a corresponding MP3 file is no long possible. Hence, the play of a corresponding MP3 file becomes possible only when additionally purchasing the RO.

Therefore, a need exists for a method and system for a method and system for moving and withdrawing a rights object between devices.

### SUMMARY OF THE INVENTION

An aspect of the present invention is to address at least the above-mentioned problems and/or disadvantages and to provide at least the advantages described below. Accordingly, an aspect of the present invention is to provide a method and system for moving a rights object between devices through an RI.

Another aspect of the present invention is to provide a method and system for withdrawing a rights object from a target device.

Still another aspect of the present invention is to provide a method and system for withdrawing and installing a corresponding rights object from an RI, when a target device does not acquire a rights object that a source device transmitted to the RI.

Yet another aspect of the present invention is to provide a method and system for notifying a source device of rights object acquisition success information, when the target device acquires the rights object that the source device transmitted to the RI.

Another aspect of the present invention is to provide a method and system for withdrawing a rights object by a source device or acquiring a rights object by a target device before a loss of the rights object requested to move by the source device.

Still another aspect of the present invention is to provide a method and system for installing a rights object withdrawn by basic information for the rights object requested to move.

Yet another aspect of the present invention is to provide a method and system for notifying a source device of a withdrawal request or acquisition success information for the rights object by an RI, according to the rights object acquisition protocol execution result with a target device.

In accordance with an aspect of the present invention, a method for withdrawing a rights object of digital contents is provided. The method includes transmitting a rights object withdrawal request message to a rights issuing server by a device, transmitting a rights object withdrawal response message to the device by the rights issuing server in response to the rights object withdrawal request message, and withdrawing and installing a corresponding rights object when receiving the rights object withdrawal response message by the device.

In accordance with another aspect of the present invention, a rights object withdrawal method is provided. The method includes moving a rights object to a rights issuing server by a source device, acquiring the rights object moved to the rights issuing server by a target device, and notifying the source device of acquisition information of the rights object by the rights issuing server.

In accordance with still another aspect of the present invention, a rights object withdrawal method is provided. The method includes moving a rights object to a rights issuing server by a source device, notifying the source device of a withdrawal of a corresponding rights object by a rights issuing server according to a performance result of a rights object acquisition protocol, and withdrawing a corresponding rights object by the source device based on the notification of the withdrawal.

In accordance with yet another aspect of the present invention, a rights object withdrawal method is provided. The method includes receiving a notification message from a rights issuing server, analyzing the notification message, withdrawing the rights object from the rights issuing server, when the notification message includes rights object withdrawal request information, and notifying that a target device acquires the rights object, when the notification message includes rights object acquisition information.

In accordance with another aspect of the present invention, a rights object withdrawal method is provided. The method includes extracting information of a corresponding requested rights object, when withdrawal of a specific rights object is requested, comparing information of the rights object with notification information previously received and stored, omitting a withdrawing operation of the rights object when notification information corresponding to the rights object exists, and withdrawing the rights object from a corresponding issuing server when the notification information corresponding to the rights object does not exist.

In accordance with still another aspect of the present invention, a method of withdrawing a rights object of digital contents is provided. The includes acquiring a withdrawal rights object from a rights issuing server, extracting basic information stored in advance corresponding to the acquired withdrawal rights object, and installing the withdrawal rights object based on the basic information.

In accordance with yet another aspect of the present invention, a method of withdrawing a rights object of digital contents is provided. The method includes storing basic information of a rights object moved to a rights issuing server, transmitting to the rights issuing server a rights object withdrawal request message including the basic information, when requesting a withdrawal of the moved rights object, acquiring a withdrawal rights object through a rights object withdrawal response message received from the rights issuing server; and installing the withdrawal rights object.

In accordance with another aspect of the present invention, a digital copyright management system is provided. The system includes a device for updating status information of a rights object after moving at least one rights object to an intended other device through a specific rights issuing server and for withdrawing and installing a specific rights object from the rights issuing server, and the rights issuing server for moving the rights object to the other device intended by the rights object after registering the rights object moved from the device and for removing a corresponding rights object from storage after moving a corresponding rights object to the device in response to a withdrawal request of the rights object by the device.

In accordance with still another aspect of the present invention, a device is provided. The device includes an input unit for selectively designating a portion of the stored rights object or the entire stored rights object and for receiving a control signal according to a move and a withdrawal of a specific rights object, a memory for storing at least one application necessary for a function operation, a digital contents, a rights object, and basic information of the rights object moved to a rights issuing server, and a controller for controlling an execution of a function relating to a move, an acquisition, a withdrawal and an installation of rights object with respect to at least one digital contents.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a diagram illustrating a configuration of a general Digital Rights Management (DRM) system;

FIG. 2 is a diagram illustrating a procedure for moving a Rights Object (RO) to a target device through a Rights Issuer (RI) in a source device according to an exemplary embodiment of the present invention;

FIG. 3 is a diagram illustrating a procedure for withdrawing an RO moved from a source device according to an exemplary embodiment of the present invention;

FIG. 4 is a diagram illustrating a procedure for withdrawing and installing an RO of a source device according to an exemplary embodiment of the present invention;

FIG. 5 is a diagram illustrating an installation process for withdrawing an RO in a source device according to an exemplary embodiment of the present invention;

FIG. 6 is a diagram illustrating a procedure for withdrawing an RO according to an exemplary embodiment of the present invention;

FIG. 7 is a diagram illustrating a procedure for omitting an RO withdrawal procedure in a device according to an exemplary embodiment of the present invention;

FIGs. 8 and 9 are diagrams illustrating a procedure for withdrawal of an RO from a device according to an exemplary embodiment of the present invention; and

FIG. 10 is a schematic block diagram of a device according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to a method and system for withdrawing and reinstalling a Rights Object (RO) of digital contents applying Digital Rights Management (DRM) technology. More particularly, according to an exemplary embodiment of the present invention, the system and the method thereof withdraws and reinstalls an RO by a source device, with respect to the RO that the source device requested an intended target device/recipient device to move through a Rights Issuer (RI).

Here, the target device and the recipient device denote a device for acquiring the RO that the source device requested the RI to move. Hereinafter, for convenience sake, the device for acquiring the RO will be called a target device.

The DRM is a system technology for safely protecting and systematically managing a right for digital contents. The DRM prevents illegally copying the digital contents, the acquisition of the digital contents usage right, generation and distribution of the digital contents and a series of protection and management system for use process.

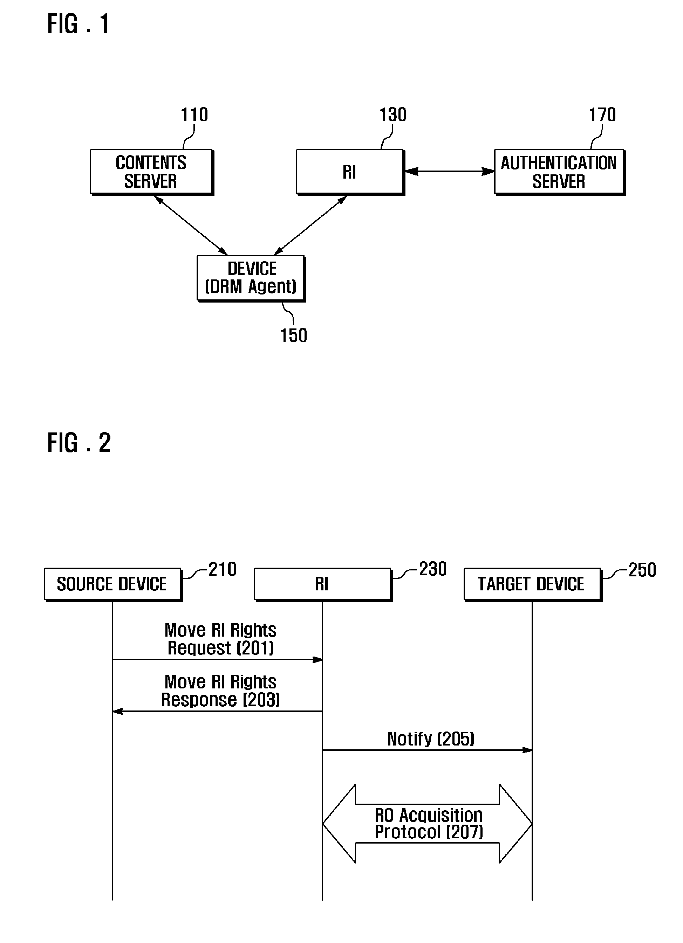

FIG. 1 is a schematic diagram of a configuration of a DRM system according to an exemplary embodiment of the present invention.

In FIG. 1, the DRM system controls the use of digital contents that an RI 130 transmitted to a user. The RI 130 determines usage rights given to the user. The DRM system may include a contents server 110, an RI 130, a device 150 and an authentication server 170.

The contents server 110 issues contents protected by using a specific encryption key, such as DRM contents, to protect digital contents from a user who does not have access rights to specific digital contents.

The RI 130 issues an RO which is necessary for using protected contents.

The device 150 receives the protected contents and the RO by a DRM agent mounted in the device 150. The device 150 converts the protected contents into an available format by decoding a license included in the RO so that the use of the protected contents is controlled.

The authentication server 170 provides a Content Encryption Key (CEK) encrypted by a public key method. The RO including the encrypted CEK is moved from the RI 130 to the device 150.

Referring to FIG. 1, the device 150 may acquire the digital contents that the user wants through the contents server 110. At this time, the contents server 110 transmits the contents applying the DRM (i.e., protected contents) to the device 150. The applying of the DRM encrypts corresponding digital contents by using an encryption key. The DRM defines an encryption format and usage limitation information for the contents is recorded according to the format defined in the DRM.

The device 150 may acquire the RO of the digital contents from the RI 130. The RO is an authentication process, giving permission for use of the digital contents, which may include a decryption key used for decoding the digital contents and usage limitation information.

Accordingly, the device 150 may play the digital contents by using the RO. That is, the device 150 may extract the decryption key used for decoding the digital contents and the usage limitation information from the RO by the DRM agent. In addition, the device 150 determines whether the use of corresponding digital contents is contrary to the usage limitation information by verifying the frequency of play and/or the duration of play of the digital contents included in the extracted usage limitation information. The device 150 may play the digital contents after decoding by using the decryption key if the determination result is not contrary to the usage limitation information.

The RI 130 determines whether the device 150 is a legal device. If the device 150 is a legal device, the RI 130 generates an RO of the digital contents to transmit to the device 150. At this time, the RI 130 may perform an authentication process for the authentication server 170, the device 150 and the RO. That is, the RI 130 determines whether the device 150 is an authenticated device through an authentication process with the authentication server 170 and provides a corresponding RO to the device 150.

In the meantime, the DRM technology supports a function of sharing or moving the RO of the digital contents between devices to enhance utility of the digital contents.

For example, the DRM technology introduces a domain technology and supports the function of freely sharing the digital contents in the domain of a user. An example of the representative DRM technology supporting the domain function is an Open Mobile Alliance (OMA) DRM 2.0. In the OMA DRM 2.0, the contents for domain is played without any particular limitation in an arbitrary device included in the domain and may be transmitted to other devices in the domain. That is, after downloading the digital contents and the RO by using the OMA DRM agent, the OMA DRM 2.0 compatible devices may share the digital contents and the RO with the devices within domain.

Moreover, the DRM technology supports the function of moving the RO of the digital contents between devices. In other words, the source device that has the RO of specific digital contents may move the RO to a target device through the RI 130.

In the meantime, a technical solution for withdrawing a corresponding RO in a source device needs to be considered, with respect to the RO that the source device shares with other device within the domain or that the source device moved through the RI. Hereinafter, the moving of the RO to the target device through the RI will be illustrated as an example. However, as described above, exemplary embodiments of the present invention may be applied to any case in which the source device moves the RO to other devices and withdraws the RO, when sharing the RO between devices within the domain.

The source device may move the RO to the RI. At this time, if the RO is successfully moved to the RI, the source device has to delete or update the RO. At this time, in the target device, if the RO is not successfully acquired, the RO may be lost.

In detail, the target device does not or may not acquire the RO that the source device moved to the RI. For example, the user of the target device may not be able to acquire the RO due to a business trip, due to a lost or a malfunction of the target device, or due to the will of a user of the target device. Moreover, when the RO moved to the RI is based on a time constraint, the target device may not be able to acquire the RO before an expiration of the corresponding RO.

In this case, the corresponding RO may not be used in the source device or target device. That is, the source device has no way of withdrawing the corresponding RO if its own RO is not successfully moved to the target device. Consequently, the source device results in a loss of the corresponding RO. Therefore, when the source device and target device need the corresponding RO, a disadvantage of re-purchasing the lost RO may occur.

Thus, an exemplary embodiment of the present invention suggests a technical solution that may successfully move the RO to the target device. Furthermore, an exemplary embodiment of the present invention suggests a technical solution that allows the source device to withdraw a portion of the RO or the entire RO that is not moved from the RI, when the RO is not successfully moved to the target device.

Hereinafter, an operation of the exemplary embodiments of the present invention will be illustrated with reference to the attached drawings.

FIG. 2 is a diagram illustrating a procedure of moving an RO to a target device through an RI in a source device according to an exemplary embodiment of the present invention. More particularly, FIG. 2 illustrates an operation of inducing a target device to acquire an RO moved to an RI by an RO move protocol (Move Rights Protocol).

Referring to FIG. 2, a source device 210 transmits a MoveRIRightsRequest (Move Rights Request) message to an RI 230 so that the source device 210 may move a specific RO to a target device 250 in step 201. That is, the source device 210 may move the Move Rights Request message including the RO of its own specific digital contents to the RI 230. At this time, there may be one or more of the specific digital contents. Therefore, the moved RO may be a portion of one digital content or the entire digital content, or may be a portion of the RO or the entire RO for each of the digital contents.

The Move Rights Request message may include information of the source device 210 and the target device 250. The information includes a device Identifier (deviceID) which indicates a serial number of the device, and may use an International Mobile Equipment Identity (IMEI).

By using an RI Uniform Resource Locator (URL) acquired in a previous purchase/renewal of the digital contents or the RO, the source device 210 may transmit the Move Rights Request message to a corresponding RI 230.

When the move of the RO is completed, the source device 210 may update (e.g., delete, subtract) status information of the moved RO. That is, a portion of the RO or the entire RO constraint of the source device 210 may be changed into a disabled state, corresponding to the moved RO. At this time, the constraint may be controlled according to a count mode, an interval mode, a time-count mode and an accumulate mode of the RO.

For example, if playing of the digital contents a total of ten times is possible by the count mode, a constraint of ten times may be set in the RO of the count mode. At this time, if an authorization is transmitted for the digital contents to be played a total of three times, which is a portion of the RO moved from the source device, the source device updates the constraint of seven times that is acquired by subtracting three times from the RO of the specific digital contents. Moreover, if an authorization is transmitted for the digital contents to be played a total of ten times, which is the entire RO, the source device updates the constraint of zero times after subtracting ten times from the RO of the specific digital contents.

As described above, the RO may be moved with respect to a portion of contents or an entire content. Additionally, a portion of the RO or the entire RO may be moved with respect to the digital contents. Moreover, such an RO update or deletion may progress after moving the Move Rights Request message, or when recognizing a successful completion of the move after receiving the Move Rights Response message from a corresponding RI.

The RI 230 that receives the Move Rights Request message from the source device 210 may perform an authentication process that confirms the information of the source device 210 when receiving the Move Rights Request message. The RI 230 determines whether the source device 210 is an effective device and determines whether the RO received through the Move Rights Request message is an RO that the RI 230 itself issued.

The authentication process may include a procedure including an electronic signature verification, a DRM time information validity verification and an element verification of RO information. The authentication process may be performed by the RI 230 using an Online Certificate Status Protocol (OCSP) with the authentication server illustrated in FIG. 1.

If problems do not exist during the authentication, the RI 230 transmits a MoveRIRightsResponse (Move Rights Response) message that includes status information with success information, which informs that the RO is successfully moved to the source device 210 in step 203. The RI 230 may change and generate a corresponding RO based on the information that the source device 210 transmits, and register the RO in its own storage area, such as a database, for the target device 250.

The RI 230 may perform an RO Acquisition Protocol so that the target device 250 may acquire the RO in step 207.

At this time, when the successful registration of the RO is completed in the RI 230, the RO of a corresponding target device 250 is selectively moved through a Notification message. The RI 230 may notify the target device 250 with information of requesting to acquire the RO in step 205. In the target device 250, the RO may be acquired by selectively performing the RO Acquisition Protocol in step 207.

In the meantime, when the source device 210 receives the Move Rights Response message from the RI 230, the source device 210 may determine whether the element of the Move Rights Response message includes a device Identifier (deviceID), an RI Identifier (riID) and a nonce that is identical with the element of the Move Rights Request message previously transmitted.

When it is determined that the elements of the source device 210 are identical, status information of the Move Rights Response message is verified. Then, if the verification is successful, the following procedure may be performed depending on whether the moved RO is moved partially or entirely. However, such a procedure may be applied to each RO corresponding to the digital contents.

In the case of the entire RO move, the source device 210 removes a corresponding RO moved through the Move Rights Request message from the source device 210 itself.

In the case of the partial RO move, the source device 210 updates the status information of the RO as much as the constraint of the RO moved through the Move Rights Request message. For example, when the RO includes a three count restriction condition, if one count is moved to the RI 230, the source device 210 subtracts one count from the three counts of the RO. Thereafter, the source device 210 updates the constraint of the RO as two counts.

Moreover, when receiving the Move Rights Response message from the RI 230, the source device 210 may transmit to the target device 250 the Move Rights Response message, which includes information indicating that the RO of a corresponding target device 250 was selectively moved through the RO acquisition request message and that the target device 250 is requested to acquire the RO.

That is, it may be requested that the target device 250 acquires the RO moved from the source device 210 or the RI 230, according to a mode defined in a system.

In the meantime, as illustrated in FIG. 2, the source device 210 updates the RO constraint of the source device 210, that is, the state information, after receiving the Move Rights Response message.

At this time, when the source device 210 does not withdraw a corresponding RO that is not successfully moved to the target device 250, which the target device's 250 RO wants to move, a loss of the RO may occur.

Accordingly, with respect to the RO that the source device moved to the RI 230, a technical solution for withdrawing and installing a corresponding RO according to the request of the source device 210 or the RI 230 needs to be considered.

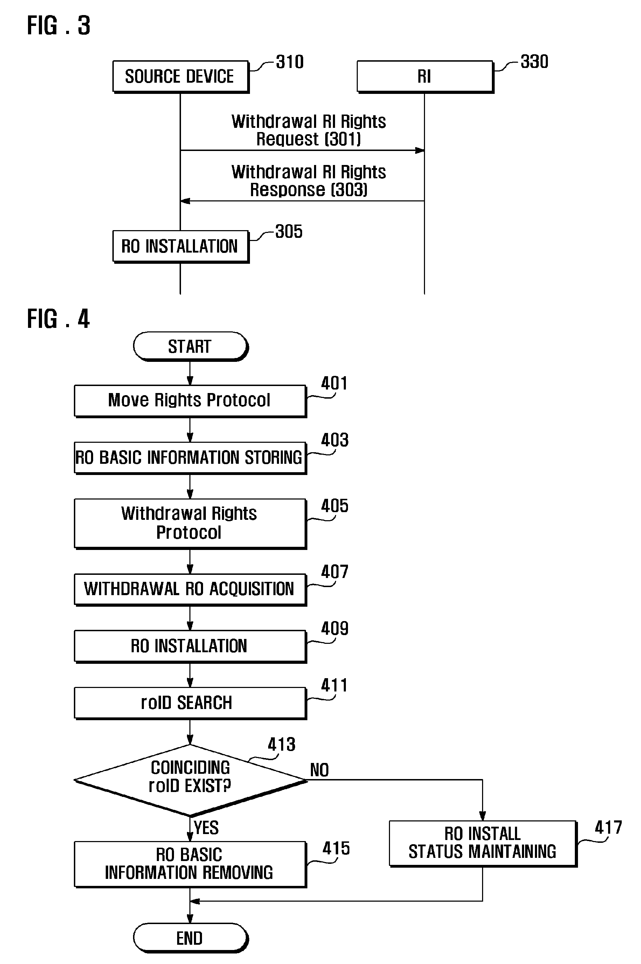

FIG. 3 is a diagram illustrating a process for withdrawing an RO moved from a source device according to an exemplary embodiment of the present invention.

More particularly, as described above with reference to FIG. 2, FIG. 3 illustrates a process that may be used after the RO of specific digital contents is moved to the RI in the source device. That is, FIG. 3 is a diagram illustrating a process of withdrawing an RO moved to the RI.

The RO withdrawal procedure may be performed by a request of notification of the RI or a request by a user. At this time, the request by the user may include an operation that the user requests through a user interface for withdrawal of the RO after the RO moved to the RI. Therefore, if the RO is moved as a result of a user's mistake, the mistake may be immediately withdrawn for user's convenience. Request by the notification of the RI is as follows.

In FIG. 3, a source device 310 denotes a device requesting to move at least one RO (partially or entirely) that the source device 310 itself possesses, through the Move Rights Request message and Move Rights Response message transceiving procedure (Move Rights Protocol procedure).

Additionally, the source device 310 denotes a device which may maintain basic information of the RO that is requested to move and may withdraw the RO that is not successfully moved to the target device, through an RO withdrawal procedure (Withdrawal Rights Protocol procedure), which will be described later.

Moreover, an RI 330 is a server that includes a function of basic rights issuing, and includes the function of generating an RO which is requested from the source device 310 through the above-described Move Rights Protocol procedure. The RI 330 also includes a server for the function of requesting the RO acquisition for the RO to the target device and moving the RO to the target device through the RO Acquisition Protocol and includes the function of notifying the source device 310 to withdraw the RO.

Referring to FIG. 3, the source device 310 transmits a WithdrawalRIRights Request (hereinafter, Withdrawal Rights Request) message to the RI 330 for withdrawal of the RO in step 301. At this time, it is assumed that the RO that the source device 310 requested to move is registered in the RI 330 and not acquired in a corresponding target device. Moreover, it is assumed that the source device 310 maintains basic information of the RO which is intended to transmit to the target device, and recognized that the target device does not acquire the RO.

By using the RI URL stored in the rights issuing context, the source device 310 may transmit the Withdrawal Rights Request message to the RI 330. The Withdrawal Rights Request message may include information of the source device 310. The information includes a device Identifier (deviceID) which indicates a serial number of the device and may use the IMEI. Moreover, the Withdrawal Rights Request message may include the information of at least one RO requesting the withdrawal. The information may be an RO Identifier (roID) for identifying the RO requesting the withdrawal.

Here, the source device 310 may include one device Identifier (deviceID) and at least one RO Identifier (roID) in the Withdrawal Rights Request message. That is, in each RO withdrawal corresponding to a plurality of digital contents or in a request for a plurality of RO withdrawal, a plurality of RO identifiers may be included.

Moreover, the Withdrawal Rights Request message may include information requesting the withdrawal of all ROs that the source device 310 moved or information requesting the withdrawal of a portion of the ROs that the source device 310 moved.

The Withdrawal Rights Request message indicates a message that the source device transmits to the RI 330 to request the withdrawal operation to one or more ROs. The Withdrawal Rights Request message may include elements in Table 1.

**[Table 1 ]**

| element/attribute | usage | value |
|---|---|---|
| reqID | M | Default, as specified in [ECE-GEN], section xyz |
| resID | M | Default, as specified in [ECE-GEN], section xyz |
| nonce | M | Default, as specified in [ECE-GEN], section xyz |
| time | M | Default, as specified in [ECE-GEN], section xyz |
| certificateChain | 0 | Default, as specified in [ECE-GEN], section xyz |
| reqlnfo | M | Specified below |
| signature | M | Signature is a digital signature on this message(besides the Signature element itself) |

| | | |
|---|---|---|
| (M: Mandatory, O: Optional) | | |

The <reginfo> element of the Withdrawal Rights Request message indicates information of a specific RO installed in the DRM agent of the device. That is, the <reglnfo> element may include information such as the RO Identifier (roID) clarifying the existing RO, and the source device Identifier (sourceDeviceID). The <reglnfo> element may be defined as roap:ROWithdrawalReqlnfo as described below.

```
 <complexType name="ROWithdrawalReqlnfo">
      <complexContent>
             <extension base="gen:Requestlnformation">
                   <sequence maxOccurs="unbounded">
                          <element name="existingRights"
                                type="roap:Withdrawallnfo"/>
                   </sequence>
             </extension>
       </complexContent>
 </complexType>
```

The <existingRights> element of the Withdrawal Rights Request message may include, as described above, information which clarifies the existing ROs.

The <Withdrawallnfo> element of the Withdrawal Rights Request message may be defined as follows:

```
 <complexType name="Withdrawallnfo">
      <element name="roID" type="ID"/>
      <element name="sourceDeviceID" type="roap:ldentifier"/>
 </complexType>
```

The RI 330 receiving the Withdrawal Rights Request message from the source device 310 may perform an authentication process for confirming the information of the source device 310 when receiving the Withdrawal Rights Request message and determining whether the source device 310 is an effective device.

The RI 330 may determine whether the RO requested for withdrawal through the Withdrawal Rights Request message is an RO that the RI 330 issued. The authentication process may include a procedure such as an electronic signature verification, a DRM time information validity verification and an element verification of RO information.

If there is no problem during the authentication process, the RI 330 transmits a WithdrawalRIRightsResponse (Withdrawal Rights Response) message including Success information which informs that a withdrawal process of the RO is successfully transmitted to the source device 310 in step 303. And the RI 330 may remove a corresponding RO clarified in the Withdrawal Rights Request message from itself.

The Withdrawal Rights Response message is a response to the Withdrawal Rights Request message of the source device 310. The Withdrawal Rights Response message is a message that the RI 330 transmits to the source device 310. The Withdrawal Rights Response message may include elements in Table 2.

**[Table 2]**

| element/attribute | usage | value |
|---|---|---|
| status | M | Default, as specified in [ECE-GEN], section xyz |
| errorMessage | 0 | Default, as specified in [ECE-GEN], section xyz |
| errorRedirectURL | 0 | Default, as specified in [ECE-GEN], section xyz |
| reqID | M | Default, as specified in [ECE-GEN], section xyz |
| resID | M | Default, as specified in [ECE-GEN], section xyz |
| nonce | M | Default, as specified in [ECE-GEN], section xyz |
| certificateChain | 0 | Default, as specified in [ECE-GEN], section xyz |
| ocspResponse | 0 | Default, as specified in [ECE-GEN], section xyz |
| rsplnfo | M | Specified below |
| signature | M | Signature is a digital signature on this message(besides the Signature element itself) |

| | | |
|---|---|---|
| (M: Mandatory, O: Optional) | | |

The <rsplnfo> element of the Withdrawal Rights Response message may include information of the current RO ID (existingROID) clarifying the existing ROs, information of the withdrawal RO (withdrawaIRo), a withdrawal result (WithdrawalResult) and a failure reason (failureReason). The <rsplnfo> element may be defined as roap:ROWithdrawalRsplnfo.

```
 <complexType name="ROWithdrawalRsplnfo">
      <complexContent>
             <extension base="gen:Responselnformation">
                   <sequence>
                         <element name="WithdrawalResult"
                               type="roap:WithdrawalResult"
                                      maxOccurs="unbounded"/>
                   </sequence>
             </extension>
      </complexContent>
 </complexType>
```

The <WithdrawalResult> element of the Withdrawal Rights Request message maybe defined as follows:

```
 <complexType name="WithdrawalResult">
      <complexcontent>
             <sequence>
                   <element name="existingROID" type="ID"/>
                   <choice>
                         <element name="WithdrawalRO"
                                type="roap:ProtectedRO"/>
                         <element name="failureReason" type="string"/>
                   </choice>
             </sequence>
      </complexContent>
 </complexType>
```

As described above, the <rspinfo> element of the Withdrawal Rights Response message may include one or more <WithdrawalResult> elements. The <WithdrawalResult> element may include <existingROID> and <WithdrawalRO> or <failureReason>.

If the RO corresponding to the <existingROID> is successfully withdrawn in view of the RI 330, the <WithdrawaIRO> corresponding to the <existingROID> may be included. Otherwise, the <failureReason> information may be included.

When the source device 310 receives the Withdrawal Rights Response message from the RI 330, the source device 310 may determine whether the elements, such as the device Identifier (deviceID) of the Withdrawal Rights Response message, the RI Identifier (riID) and a nonce correspond to a previously transmitted element of the Withdrawal Rights Request message.

When it is determined that the elements correspond, the source device 310 verifies the status element of the Withdrawal Rights Response message. If the verification is successful, the source device 310 is set to use a corresponding RO based on the current RO Identifier (existingROID) information and the withdrawn RO (WithdrawalRO) element in step 305.

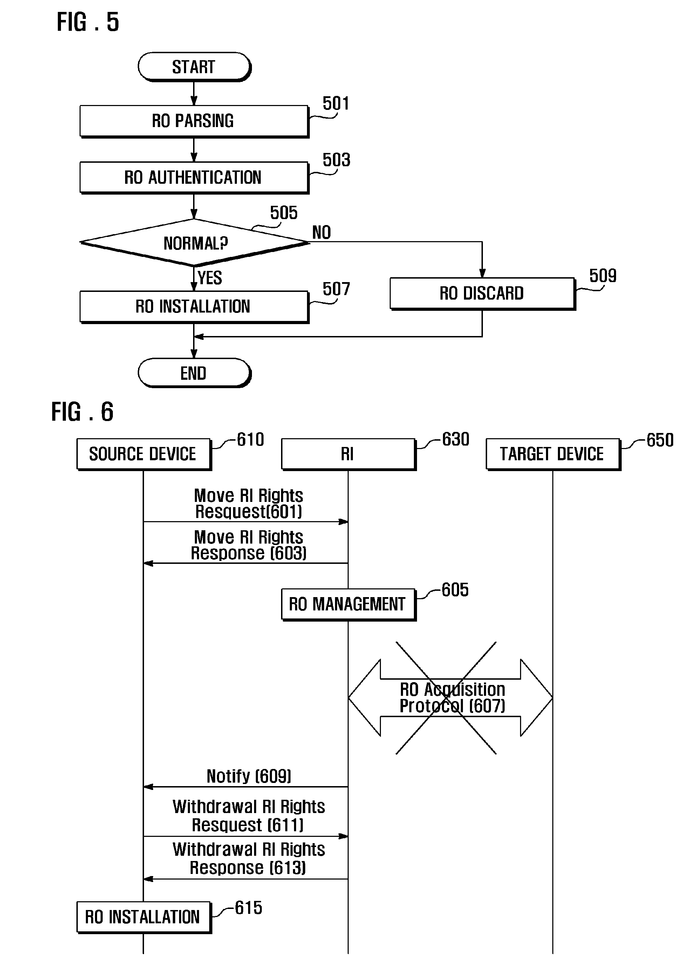

Hereinafter, the detailed operation of the source device withdrawing and installing the RO will be illustrated with reference to FIGs. 4 and 5.

FIG. 4 is a diagram illustrating a process for withdrawing and installing an RO of a source device according to an exemplary embodiment of the present invention.

Referring to FIG. 4, the source device may perform the Move Rights Protocol as described above in step 401. At this time, the source device may store basic information of the RO for the withdrawal in step 403.

The basic information may include at least one RO Identifier (roID) of a moved RO, the Contents Identifier (CID, contentsID) which is the information of the digital contents corresponding to the RO and Time Information (movedDateTime) when the Move Rights Protocol is performed. The Time Information may include the Move Rights Protocol performance date and performance time. The basic information may be removed when the moved RO is successfully moved to the target device or when the source device successfully receives the withdrawal RO and succeeds in installation.

The basic information may be stored by using a withdrawal table, which may be in the form of a Database (DB). The field of the withdrawal table may be comprised of fields such as at least one Content Identifier (CID) for at least one digital content, at least one RO Identifier (roID) by digital contents and Time Information (movedDateTime) during which the Move Rights Protocol is performed for a corresponding RO.

The source device may perform the Withdrawal Rights Protocol based on a user's request or the RI request in step 405. At this time, in order to perform the Withdrawal Rights Protocol, the source device generates the Withdrawal Rights Request message with reference to the basic information (roID, CID and movedDateTime or the like) of the RO stored while performing the Move Rights Protocol. The source device may transmit to a corresponding RI the Withdrawal Rights Request message including the device Identifier (deviceID) of the source device and at least one RO Identifier (roID).

By using the basic information (deviceID, roID) included in the Withdrawal Rights Request message, the corresponding RI may perform the verification for the source device and the RO that the source device requests. At this time, when the roID within the Withdrawal Rights Request message is the RO that is not moved to the target device, the RI may transmit to the source device the Withdrawal Rights Response message including a corresponding RO (withdrawal RO) requested for withdrawing and related information.

If the source device acquires the withdrawal RO from the RI when receiving the Withdrawal Rights Response message in step 407, the installation of a corresponding RO is performed in step 409. The installation of the RO will be illustrated with reference to FIG. 5.

If the source device successfully completes the installation of the RO, a coinciding RO Identifier (roID) is searched in the withdrawal table by using the RO Identifier (roID) of the installed RO in step 411.

At this time, if the coinciding RO Identifier (roID) exists in step 413, the source device removes the corresponding basic information (roID, CID, contentsID and movedDateTime) in the withdrawal table based on the searched RO Identifier (roID) in step 415. On the other hand, if the coinciding RO Identifier (roID) does not exist in step 413, the source device may maintain a state where the withdrawal RO is installed in step 417.

FIG. 5 is a diagram illustrating an installation process for withdrawing an RO in a source device according to an exemplary embodiment of the present invention;

Referring to FIGs. 4 and 5, if the source device acquires the withdrawal RO from the RI, the source device may perform a parsing for the withdrawal RO in step 501. The parsing may be performed by using a module which extracts corresponding information by correctly reading data including an arbitrarily defined tag and verifies the validity that determines whether corresponding information is effective. The module is configured in a device in the form of an application and may include, for example, an extensible Markup Language (XML) Parser.

The source device may perform an authentication process on the extracting result through the parsing in step 503. The authentication may include the validation verification procedure for the extracting result, such as a Signature, a Message Authentication Code (MAC) and a Rights Encryption Key (REK).

As a result of the authentication process in step 505, if the source device determines whether the authentication process is successful in step 505, the source device performs the installation of a corresponding RO with reference to the basic information of the withdrawal table in step 507. That is, in the withdrawal table, the installation of a corresponding RO may be performed through the basic information extraction corresponding to the RO. On the other hand, in step 505, if the authentication process failed, the source device may discard the corresponding RO in step 509.

FIG. 6 is a diagram illustrating a process for withdrawing an RO according to an exemplary embodiment of the present invention. More particularly, in FIG. 6, the procedure of withdrawing an RO in response to the request of an RI is illustrated.

Referring to FIG. 6, the source device 610 may selectively move to the RI 630 a partial RO or an entire RO for at least one digital content through the Move Rights Protocol procedure in steps S601 and S603.

The RI 630 may perform an RO management that the source device 610 moves in step 605. That is, the RI 630 may store a corresponding RO moved from the source device 610 and the basic information of the corresponding RO. The RI 630 may also perform an RO Acquisition Protocol so that the target device 650 may acquire the RO that the source device 610 requested to move.

At this time, according to the performance result of the RO Acquisition Protocol, the RI 630 may notify the source device 610 of the withdrawal of the RO or may notify the source device 610 that the RO is successfully acquired through the target device 650 in step 607.

However, the target device 650 may not perform the acquisition of the RO due to the notification that the RO is successfully acquired in step 607.

In this case, the RI 630 may notify a corresponding source device 610 that moved the RO to withdraw the RO in step 609. The notification may be performed through a notification message transmission, in which the RI 630 requests the withdrawal of the RO. The notification message may be the RO acquisition request message. The notification message transmission may be attempted one or more times according to a setting mode. That is, according to a result of the RO Acquisition Protocol performance, the RI 630 may periodically transmit the RO acquisition request message to the source device 610 a preset number of times.

Moreover, the RI 630 may transmit to the target device 650 the notification message requesting the RO acquisition. That is, according to the performance result of the RO Acquisition Protocol, when the target device 650 does not acquire the RO, the notification message may be transmitted to the target device 650 a preset number of times. The notification message may be the RO acquisition request message.

Moreover, after transmitting the notification message (RO acquisition request message), when the target device 650 does not acquire a corresponding RO, the RI 630 determines that the RO failed the RO Acquisition Protocol and may transmit the notification message (RO acquisition request) to the source device 610 which requests the withdrawal of the RO.

In the meantime, the RI 630 withdraws/acquires a corresponding RO from the source device 610 or the target device 650 by the process described above or the RI 630 may delete a corresponding RO and information of the corresponding RO when the RO is not withdrawn/acquired.

When the source device 610 receives the notification message (RO acquisition request message) from the RI 630, the withdrawal procedure of a corresponding RO requested to be moved by the notification message (RO acquisition request message) may be performed through the verification of a corresponding RO in steps 611 and 613. Referring to FIG. 3 as described above, the withdrawal procedure may withdraw the RO through the Withdrawal Rights Protocol procedure.

The source device 610 may transmit the Withdrawal Rights Request message for withdrawing a corresponding RO based on information of the RO defined in the notification message (RO acquisition request message) and basic information of the RO set in the source device 610 in step 611. The RI 630 may transmit the Withdrawal Rights Response message including the RO to the source device 610 in step 613.

The verification of the RO may be performed by the procedure which verifies the elements of the RO Identifier (roID), the device Identifier (deviceID), the RI Identifier (riID) and the nonce included in the notification message (RO acquisition request message) and verifies whether the RO corresponds to the content transmitted through the previous Move Rights Request message. Moreover, the verification may be performed by comparing with the basic information set for a corresponding RO in the transmitting Move Rights Request message.

The source device 610 performs the process of installing the withdrawn RO to use again in step 615. The installation of the withdrawn RO corresponds to the description illustrated with reference to FIGs. 4 and 5. The RI 630 may remove a corresponding RO registered in the RI 630 and basic information of the RO when the withdrawal of the RO is completed by the source device 610.

As described above, in an exemplary embodiment of the present invention, if the target device 650 does not acquire the RO, the source device 610 that moved a corresponding RO withdraws the RO. Thus, the RO loss of the source device 610 and the burden of additional purchase cost may be reduced.

In an exemplary implementation, the source device 610 that moved the RO or the target device 650 that the source device 610 designated receives the notification of the RO. However, the RI 630 may transmit a notification, at the same time, to both the source device 610 and the target device 650. The notification function may be performed according to a preset policy of the RI 630.

In the meantime, in FIG. 6, an operation of the source device 610 performing the withdrawal procedure of a corresponding RO by the notification of the RI 630 is illustrated. That is, in FIG. 6, the notification includes the content of the RI 630 requesting a corresponding source device 610 to withdraw a corresponding RO.

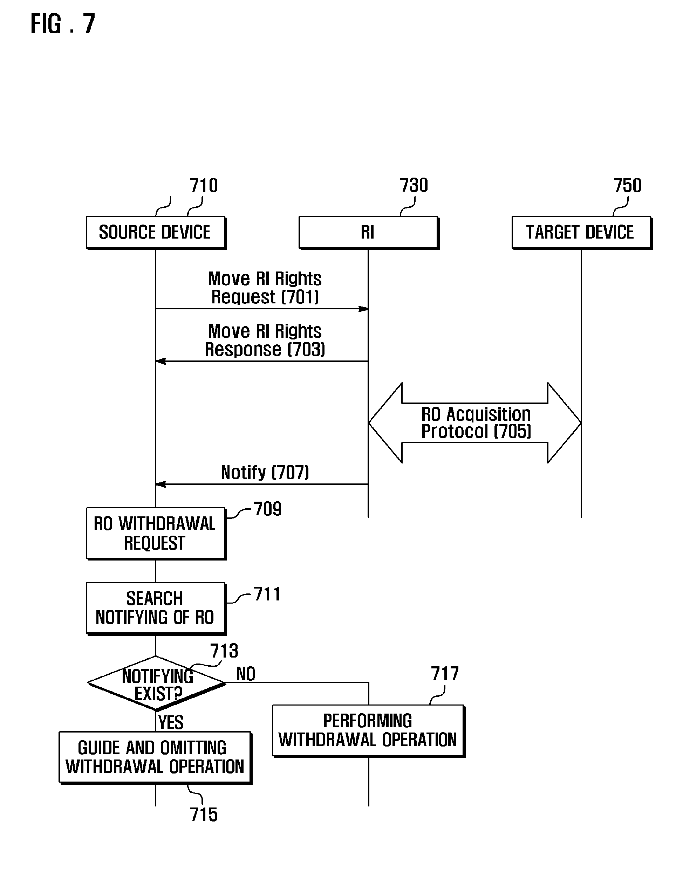

However, the notification that the RI 630 transmits to the source device 610 does not always include the notification of FIG. 6. That is, when the source device 610 successfully withdraws the RO, the RI 630 may notify the target device 650 of information regarding the RO. Moreover, when the target device 650 successfully acquires the RO, the RI 630 may notify information regarding the RO to the source device 610. In consequence, the unnecessary withdrawal/acquisition procedure of the source device 610 and target device 650 may be omitted. Therefore, the occurrence of unnecessary charging, according to a connection to a wireless communication, may be prevented, which is exemplified with reference to FIG. 7 below.

FIG. 7 is a diagram illustrating a process of omitting an RO withdrawal procedure in a device according to an exemplary embodiment of the present invention. More particularly, FIG. 7 illustrates a process of omitting an RO withdrawal in a source device according to a user's request in response to the notification of an RI. In illustrating FIG. 7, a detailed description of the operation corresponding to FIG. 2, FIG. 3 and FIG. 6 will be omitted.

Referring to FIG. 7, the source device 710 may move a portion of a specific RO or the entire specific RO to the RI 730 through the RI 730 and Move Rights Protocol procedure in steps 701 and 703. The target device 750 may acquire a corresponding RO moved to the RI 730 through the RO Acquisition Protocol in step 705.

The RI 730 may notify the source device 710 that the RO which the source device 710 moved is successfully acquired through the target device 750 in step 707. That is, when the target device 750 acquires the RO, the RI 730 may transmit the notification message including the information regarding the RO to the source device 710.

Therefore, the notification message in FIG. 7 provides content that the corresponding source device 710 recognizes that includes the information regarding when the RO that is transmitted is acquired in the target device 750.

Accordingly, in FIG. 7, the source device 710 stores information of the notification message when receiving the notification message from the RI 730. Additionally, the target device 750 may inform a user of the information of acquiring the RO that is previously moved through the Move Rights Request message.

When the withdrawal request of the RO is generated from the user in step 709, the source device 710 searches information of at least one notification message previously stored in step 711, and may verify the existence of the notification information corresponding to the RO requested for withdrawal in step 713.

When the notification information of the requested RO exists, the source device 710 may inform that the requested RO is successfully acquired through the target device 750 and the requested RO withdrawal procedure may be omitted in step 715.

On the other hand, when the notification of the requested RO does not exist, the source device 710 may perform the RO withdrawal procedure for the requested RO in step 717.

Referring to FIGs. 6 and 7, it is illustrated that, a notification function exists so that the source device withdraw of the RO stored in the RI to prevent an unnecessary RO loss, if the target device does not acquire the RO (FIG. 6). A notification function exists to prevent the unnecessary RO withdrawal of the source device, if the target device acquires the RO (FIG. 7).

Additionally, as an application of the notification function, in an exemplary embodiment of the present invention, when the source device withdraws the RO that the source device itself moved, information regarding the RO may be notified to the target device from one of the source device and the RI. Moreover, when the source device moves the RO to the RI, information regarding the RO may be notified from the source device or the RI to the target device. Moreover, if a plurality of ROs are moved to the RI and there are a plurality of target devices, the function of notifying a specific target device of a specific RO acquired may be provided.

As described, the source device and the RI have knowledge of the information for a Move RO, a withdrawal RO and the notification. The source device may store and memorize information according to the Move Rights Protocol, the Withdrawal Rights Protocol and the notification procedure performance.

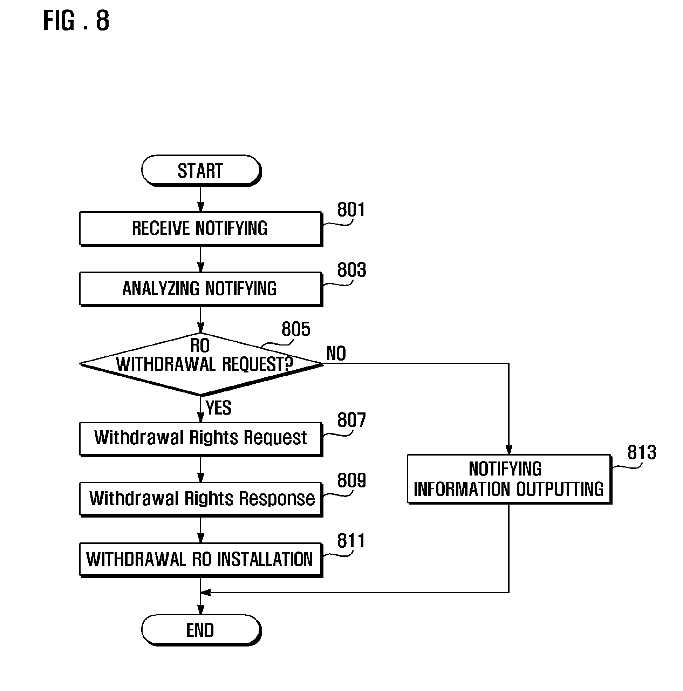

Fig. 8 is a diagram illustrating a control motion according to an RO withdrawal of a device according to an exemplary embodiment of the present invention

Referring to FIG. 8, when the device receives a notification message from the RI in step 801, the device analyzes and stores the notification message in step 803, and may determine whether the notification message includes the RO acquisition request information in step 805.

As a result of the determination, when the notification message includes the RO acquisition request information, the device transmits the Withdrawal Rights Request message to the RI and requests the RO withdrawal in step 807. The RO acquisition request information may include information that the RI requests the RO withdrawal to the device.

When the device receives the Withdrawal Rights Response message from the RI in step 809, the device may acquire the RO included in the Withdrawal Rights Response message and may install the RO based on an installation procedure in step 811.

As a result of the determination, when the notification message includes RO acquisition success information of the target device, the device may output the notification message information in step 813. The RO acquisition success information may include information which informs that a corresponding RO that the device requested to move is successfully moved to the intended target device.

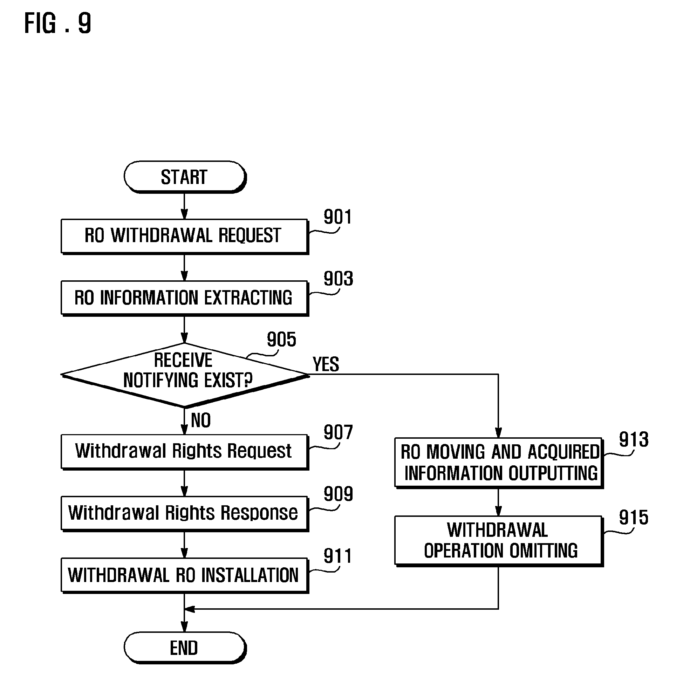

Fig. 9 is a diagram illustrating a procedure for withdrawal of an RO from a device according to an exemplary embodiment of the present invention

Referring to FIG. 9, if a user requests the withdrawal of a specific RO that is previously moved in step 901, the device may extract basic information of the requested corresponding RO in step 903. The withdrawal request of the RO may be performed by using the basic information of the RO stored in a transmitted Move Rights Request message.

The device may search whether a notification previously received and stored for the RO exists in step 905. That is, the notification may be determined by comparing the extracted basic information of RO with information of the notification message previously received and stored.

As a result of the search in step 905, when there is no notification of the RO, the device may withdraw the RO based on the Withdrawal Rights Request message and the Withdrawal Rights Response message transceiving procedure in steps 907 and 909. Then, the device may install the withdrawn RO based on the above-described installation procedure in the device itself in step 911.

As a result of the searching in step 905, when a notification of the RO exists, the device may output move and acquisition information of the requested RO in step 913. The move and acquisition information may include information of a point in time (date, time) that the RO is moved, information of the target device and information indicating that a corresponding RO is successfully acquired through the target device. And the device may omit the requested withdrawal operation in step 915.

Hereinafter, the configuration and operation of a control means and device including the control means according to an exemplary embodiment of the present invention are illustrated below. However, it should be noted that the present invention is not restricted to the below description, but may be applied to various exemplary embodiments.

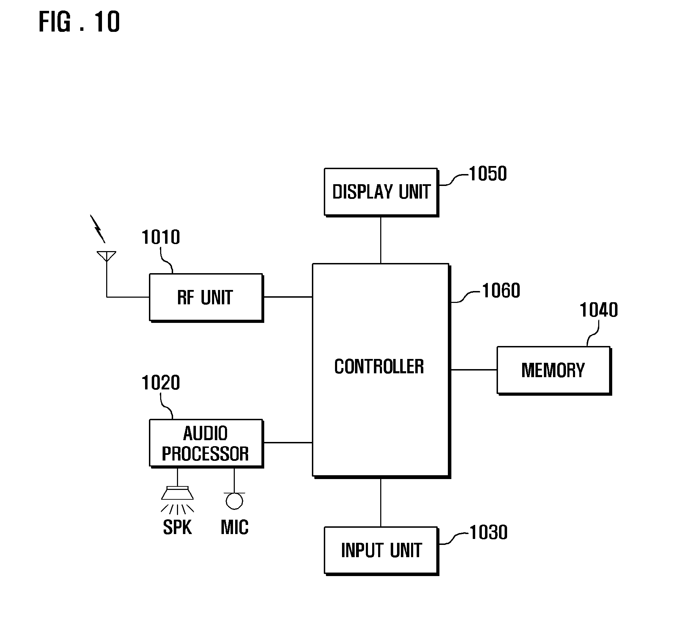

FIG. 10 is a schematic block diagram of a device according to an exemplary embodiment of the present invention

As illustrated in FIG. 10, the device according to an exemplary embodiment of the present invention includes a Radio Frequency (RF) unit 1010, an audio processor 1020, an input unit 1030, memory 1040, a display unit 1050 and a controller 1060. The device having such a configuration indicates a source device and a target device in the above description.

Referring to FIG. 10, the RF unit 1010 performs a radio communication function of a device. The RF unit 1010 forms a communications channel with a wireless network to perform voice communication and data communication. The RF unit 1010 may include an RF transmitter which up-converts and amplifies the frequency of a transmitted signal and an RF receiver which low-noise amplifies a received signal and down-converts the frequency. More particularly, in response to control of the controller 1060, the RF unit 1010 forms a data communications channel with a contents server and an RI, and may download digital contents and an RO. The RF unit 1010 moves the RO stored in the memory 1040 to the RI under the control of the controller 1060 or may receive the RO moved from the RI. Moreover, the RF unit 1010 may transceive a message according to the Move Rights Protocol, the Withdrawal Rights Protocol and the RO Acquisition Protocol.

The audio processor 1020 converts an analog audio signal input from a Microphone (MIC) into a digital voice signal and transmits the digital voice signal to the controller 1060 or converts the digital voice signal transmitted from the controller 1060 into an analog audio signal and outputs the analog audio signal through a Speaker (SPK). More particularly, when playing the digital contents stored in the memory unit 1040, the audio processor 1020 may process and output the audio information related to the digital contents.

The input unit 1030 receives various character information and transmits to the controller 1060 a key signal input in connection with a setting of various kinds of functions and a function control of a device. The input unit 1030 may further include a function key such as a direction key which is set to perform a specific application, a volume key and a hotkey. More particularly, the input unit 1030 receives a control signal according to the function execution and may transmit the control signal to the controller 1060. The input unit 1030 may transmit to the controller 1060 and the RI a related control signal for selectively designating a portion of the RO stored in the memory unit 1040 or the entire RO stored in the memory unit 1040.

The memory unit 1040 stores at least one application necessary for the function operation according to an exemplary embodiment of the present invention, user data generated by a user and data according to application execution. The memory 1040 includes at least one buffer which temporarily stores data generated during the application execution.

The application may be an application that processes the message transceived through the Move Rights Protocol, the Withdrawal Rights Protocol and the RO Acquisition Protocol, an application that extracts and manages basic information of the RO which moves or withdraws, an application that takes charge of the processing relating to the play of the digital contents, an application (DRM agent) that takes charge of the overall processing for digital contents and RO, an application (XML parser) which parses and analyzes information of the withdrawn RO and an application that processes the installation related control of the withdrawn RO.

More particularly, the memory 1040 stores the acquired digital contents and RO, and may store basic information of the RO moved to the RI. The basic information may include at least one RO Identifier (roID) for the moved RO, the Content Identifier (CID: contentsID) which is information of the digital contents corresponding to the RO and time information (movedDateTime) during which the Move Rights Protocol is performed. The memory 1040 may store a withdrawal table for the basic information in the form of a database.

The display unit 1050 displays screen data generated during the above-described application execution, a key manipulation state of a user and function setting information. More particularly, the display unit 1050 may display screen data such as a User Interface (UI) relating to the play of digital contents, a user interface relating to the installing and transmission for at least one RO move and a user interface for displaying related notification information corresponding to the RO withdrawal request. The display unit 1050 may be formed with a Liquid Crystal Display (LCD). The display unit 1050 of the LCD may include in an input means, such as a touch screen.

The controller 1060 controls the overall operation of the device and the signal flow between each configuration of the device. The controller 1060 controls the signal flow between the RF unit 1010, the audio processor 1020, the input unit 1030, memory 1040 and the display unit 1050. The controller 1060 may include a data processor (not illustrated) including a codec and a modem.

More particularly, as described above, the controller 1060 controls the execution of function relating to the move of the RO, the acquisition of, the withdrawal of and the installation of at least one digital content. An exemplary operation of the controller 1060 according to the execution of each function will be illustrated below, and includes the operation which was illustrated with reference to FIGs. 2 to 9.

The controller 1060 controls the move of at least one RO designated by a user to a corresponding RI that issued a corresponding RO through performing the Move Rights Protocol. More particularly, the controller 1060 may store basic information of the moved RO by using a withdrawal table for the withdrawal of the moved RO in the operation of Move Rights Protocol.

The controller 1060 controls the withdrawal of the moved RO through performing the Withdrawal Rights Protocol based on a user request or the RI request. In response to the RO withdrawal request from the user, the Withdrawal Rights Request message is generated and may be transmitted to a corresponding RI that issued the RO, which is requested to withdraw. At this time, the controller 1060 may control the RO withdrawal based on basic information of the RO. In response to the user request or the RO withdrawal request of the RI, the controller 1060 may perform the Withdrawal Rights Protocol by itself. Otherwise, when receiving the RO withdrawal request of the RI, the controller 1060 may notify the RO withdrawal request to the user and may perform the Withdrawal Rights Protocol in response to the user request.

The controller 1060 parses the received RO when receiving the withdrawal RO from the RI according to the Withdrawal Rights Protocol performance and verifies the received RO with reference to the withdrawal table storing basic information of the moved RO. When the received RO is verified to be successfully acquired, the controller 1060 may perform an installation based on basic information of a corresponding RO. If the RO installation is successfully completed, the controller 1060 searches coinciding basic information in the withdrawal table and may remove the coinciding basic information with reference to basic information (roID) of the installed RO.

When the controller 1060 receives the user request or the RO acquisition request information of the RI, the controller 1060 controls the acquisition of a corresponding RO through the RO Acquisition Protocol.

In FIG. 10, for convenience sake, a schematic configuration of a device according to an exemplary embodiment of the present invention was illustrated. However, the device of the present invention is not restricted to the above-described configuration. Accordingly, the device of the present invention may further include configurations, which are not illustrated, such as, a local area communications module, an electronic payment module, a digital broadcasting module, an internet communications module and a battery module. Moreover, the device of the present invention may exclude specific configurations or may replace certain configurations.

As described above, according to the Rights Object (RO) withdrawal method and system of the digital contents suggested in an exemplary embodiment of the present invention, the Rights Object (RO) moved to the Rights Issuing (RI) server may be withdrawn and installed without additional cost. Thus, loss of corresponding RO may be prevented when the RO moved to the RI is not acquired by the target device.

When the target device does not successfully acquire the RO that the source device requested to move, the source device withdraws and installs again, so that loss of the RO of the source device may be prevented in advance and additional costs according to the RO installation may be prevented.

Moreover, for the RO requested to move, the RI notifies the source device that a corresponding RO should be withdrawn, according to the performance result of the RO Acquisition Protocol with the target device. Therefore, the loss of the RO may be prevented in advance.

Moreover, for the rights object requested to move, the RI notifies the acquisition success information of a corresponding object to the source device, according to the result of performing the RO Acquisition Protocol with the target device. Accordingly, withdrawing operation, which is requested later, may be omitted by the notification. Therefore, the withdrawing operation of the RO that the target device successfully acquired is omitted, so that unnecessary charging may be prevented in advance.

While the invention has been described with reference to certain exemplary embodiments thereof, it will be understood by those skilled in the art that various changes in form and details may be made therein without departing from the spirit and scope of the invention as defined in the appended claims and their equivalents.

## Claims

1. A method of withdrawing a rights object of a digital contents, the method comprising:
transmitting a rights object withdrawal request message to a rights issuing server by a device;
transmitting a rights object withdrawal response message to the device in response to the rights object withdrawal request message by the rights issuing server; and
withdrawing and installing a corresponding rights object by the device when receiving the rights object withdrawal response message.

2. The method of claim 1, wherein the rights object withdrawal request message comprises a device Identifier (deviceID) of the device and a rights object Identifier (roID) of at least one withdrawal rights object, wherein the rights object withdrawal response message comprises a device Identifier (deviceID) of the device, status information of the rights object withdrawal request and a right object Identifier (roID) of at least one withdrawal rights object.

3. The method of claim 2, wherein the device processes a withdrawal and installation of the rights object based on the status information.

4. The method of claim 1, further comprising removing by the rights issuing server, a corresponding rights object comprised in the rights object withdrawal request message.

5. The method of claim 1, further comprising:
delivering the rights object to the rights issuing server by the device;
notifying one of the device and a target device information of the rights object by the rights issuing server; and
at least one of withdrawing and acquiring the rights object based on the notification by one of the device and the target device.

6. The method of claim 5, wherein the rights issuing server notifies one of the device and the target device of at least one of withdrawal request information, normal acquisition information and acquisition request information for the rights object.

7. The method of claim 6, wherein the rights issuing server requests an acquisition of the rights object to the target device and requests a withdrawal of the rights object to the device, when the target device does not have acquisition of the rights object.

8. The method of claim 6, further comprising:
withdrawing the rights object from the rights issuing server, when the device receives the withdrawal request information of the rights object; and
notifying to a user that the target device acquires the rights object, when the device receives the acquisition information of the rights object.

9. The method of claim 5, further comprising:
extracting the information of the rights object, when the device determines a withdrawal request of rights object;
comparing the information of the rights object with the notification information previously received and stored;
omitting a withdrawal operation of the rights object, when notification information corresponding to the rights object exists;
withdrawing the rights object from the rights issuing server, when the notification information corresponding to the rights object does not exist; and
updating status information of the rights object.

10. A digital copyright management system, the system comprising:
a device for updating status information of a rights object after moving at least one rights object to an intended other device through a specific rights issuing server and for withdrawing and installing a specific rights object from the rights issuing server; and
the rights issuing server for moving the rights object to the other device intended by the rights object after registering the rights object moved from the device and for removing a corresponding rights object from storage after moving a corresponding rights object to the device in response to a withdrawal request of the rights object by the device.

11. The system of claim 10, wherein the rights issuing server transmits a notification message comprising one of rights object withdrawal request information and rights object acquisition information for the rights object that the device moved.

12. The system of claim 11, wherein the device withdraws a corresponding rights object corresponding to the rights object withdrawal request information, when receiving a notification message comprising the rights object withdrawal request information from the rights issuing server, and omits the withdrawal request of the rights object, when receiving a notification message comprising the rights object acquisition request information from the rights issuing server.

13. The system of claim 11, wherein the rights issuing server requests an acquisition of the rights object to a corresponding target device intended by the device and requests a withdrawal of the rights object to the device, when the target device does not acquire the rights object.

14. A device comprising:
an input unit for selectively designating a portion of the stored rights object or the entire stored rights object and for receiving a control signal according to a move and a withdrawal of a specific rights object;
a memory for storing a digital contents, a rights object and basic information of the rights object moved to a rights issuing server; and
a controller for controlling an execution of a function relating to a move, an acquisition, a withdrawal and an installation of the rights object with respect to at least one digital contents and for controlling a withdrawal of moved rights object based on the basic information.

15. The device of claim 14, wherein the basic information comprises a right object Identifier (roID) of the rights object moved to the rights issuing server, a contents Identifier (CID: contentsID) and move time information (movedDateTime) of the rights object.
